## Europäisches Patentamt
## European Patent Office
## Office européen des brevets

(19)

(11) Veröffentlichungsnummer: **0 111 187**
**B1**

(12)

# EUROPÄISCHE PATENTSCHRIFT

(45) Veröffentlichungstag der Patentschrift:
**05.11.86**

(51) Int. Cl.⁴: **G 01 F 1/58**

(21) Anmeldenummer: **83111514.2**

(22) Anmeldetag: **17.11.83**

(54) **Magnetisch-induktiver Durchflussmesser für hohe Temperaturen.**

(30) Priorität: **01.12.82 DE 3244473**

(43) Veröffentlichungstag der Anmeldung:
**20.06.84 Patentblatt 84/25**

(45) Bekanntmachung des Hinweises auf die Patenterteilung:
**05.11.86 Patentblatt 86/45**

(84) Benannte Vertragsstaaten:
**DE FR GB IT**

(56) Entgegenhaltungen:
**EP-A-0 080 535**
**DE-B-1 098 727**
**GB-A-899 095**
**GB-A-2 068 122**
**US-A-3 724 268**

(73) Patentinhaber: **INTERATOM Gesellschaft mit beschränkter Haftung, Friedrich- Ebert- Strasse, D-5060 Bergisch Gladbach 1 (DE)**

(72) Erfinder: **Knaak, Joachim, Dr., Am Rabenhorst 15, D-5060 Bergisch- Gladbach (DE)**

(74) Vertreter: **Mehl, Ernst, Dipl.- Ing., Postfach 22 01 76, D-8000 München 22 (DE)**

## Beschreibung

Die vorliegende Erfindung betrifft einen magnetisch-induktiven Durchflußmesser für hohe Temperaturen und elektrisch schlecht leitende Flüssigkeiten. Magnetisch-induktive Durchflußmesser sind in der Technik seit langem bekannt. Ein senkrecht zu einer strömenden Flüssigkeit verlaufendes Magnetfeld bewirkt aufgrund von Lorenzkräften, daß in der strömenden Flüssigkeit eine Spannung aufgebaut wird, welche senkrecht zur Magnetfeldrichtung und zur Strömungsrichtung liegt. Diese Spannung ist bei vorgegebenem Magnetfeld proportional dem Volumenstrom der Flüssigkeit. Es ist bekannt, diese Spannung mittels Elektroden zu messen und nach diemsem System Durchflußmeßgeräte zu bauen.

In einem Prospekt der Firma Fischer & Porter GmbH, Göttingen (Kat. 1.2, 1982), werden neuere Durchflußmeßgeräte nach diesem Prinzip beschrieben. Zur Vermeidung von elektrochemischen Prozessen werden diese Durchflußmesser nicht mit konstantem Magnetfeld, sondern mit Wechselstrom oder pulsierendem Gleichstrom betrieben. Bei elektrisch schlecht leitenden Flüssigkeiten ist ein weiteres Problem zu beachten. Eine metallische Rohrleitung würde die in der Flüssigkeit entstehende Spannung kurzschließen und eine Messung unmöglich machen. Daher müssen magnetisch-induktive Durchflußmesser für elektrisch schlecht leitende Flüssigkeiten aus einem Rohrleitungsstück bestehen, welches im Bereich des Magnetfeldes auf der Innenseite elektrisch isoliert ist. Die Elektroden müssen dann isoliert durch die Wandung des Rohrleitungstückes und durch die Isolierung ins Innere geführt werden, wo sie in Kontakt mit der Flüssigkeit treten. Aus dem oben genannten Prospekt sind Durchflußmesser für elektrisch schlecht leitende Flüssigekeiten bekannt, welche nach diesem Prinzip arbeiten und inhen mit Gummi, Kunststoff oder Keramik beschichtet sind. Diese Bauart hat allerdings eine Obergrenze in Bezug auf die maximale Meßstofftemperatur, welche im Bereich von 180° C liegt. Für höhere Temperaturen konnten bisher die Probleme, die sich durch mangelnde Temperaturbeständigkeit der Auskleidung oder durch unterschiedliche Ausdehnungskoeffizienten von Rohrleitungsstück und Auskleidung sowie bei der dichten Durchführung der Elektrodempzuleitungen ergeben, nicht befriedigend gelöst werden.

Aus der GB-A-899 095 ist auch schon eine lose eingelegte keramische Innenisolierung in Form einer dünnen keramischen Schicht bekannt, welche mit einem geringen Spiel lose in ein Rohrstück eingesetzt ist. Auch bei dieser Anordnung sind jedoch die Elektroden durch die Rohrwandung und durch die keramische Schicht hindurchgeführt, wodurch hohe thermische Belastungen der Durchführungen nicht möglich sind. Dementsprechend eignet sich dieser Durchflußmesser nicht für extreme Temperaturbedingungen.

Aus der US-A-3 724 268 ist ferner eine Durchfluß-Meßapparatur für nukleare, natriumgekühlte Reaktoren bekannt, bei welcher Elektroden nicht direkt durch die Wandung eines Rohrleitungsstückes gelegt sind, sondern parallel zu dieser verlaufen. Bei dieser Anordnung handelt es sich jedoch um eine Vorrichtung für das elektrisch sehr gut leitende flüssige Natrium, wodurch die vorliegende Probleme einer keramischen Innenisolierung nicht auftreten. Eventuelle Kurzschlüsse über eine elektrisch leitende Rohrwandung oder eine Ummantelung der Elektroden spielt bei solchen Messungen keine Rolle, ganz im Gegensatz zur Aufgabenstellung der vorliegenden Erfindung.

Aufgabe der vorliegenden Erfindung ist ein Durchflußmesser, welcher bei bedeutend höheren Temperaturen einsetzbar und für elektrisch schlecht leitende Flüssigkeiten geeignet ist.

Zur Lösung dieser Aufgabe wird ein Durchflußmesser nach dem Anspruch 1 vorgeschlagen. Die oben beschriebenen Probleme werden dadurch gelöst, daß als Isolierung keine Schicht mehr fest mit der Innenseite des Rohrleitungsstückes verbunden wird, sondern als Ganzes ein Keramikrohr mit einem geringen Spiel in das Rohrleitungsstück eingeschoben und in diesen verdrehsicher verkeilt wird. Da keine feste Verbindung zwischen Rohrleitungsstück und Keramikrohr besteht, kann es auch bei unterschiedlichen Wärmeausdehnungen nicht zu Brüchen und Beschädigungen der Isolierung kommen. Zusätzlich wird auch auf Durchführungen in dem Keramikrohr ganz verzichtet und statt dessen werden die Zuleitungen der Elektroden auf der Innenseite des Keramikrohres verlegt bis zu dessen Ende und erst dann durch die Wandung des Rohrleitungsstückes nach außen geführt. Da die dichte Durchführung von Leitungen durch eine Metallwandung kein Problem darstellt, werden auf diese Weise die zuvor genannten Risiken vermieden.

Grundlegend für diese neuartige Konstruktion ist die Erkenntnis, daß ein Eindringen von Flüssigkeit zwischen Keramikrohr und Wandung des Rohrleitungsstückes keinen nachteiligen Einfluß auf die Messung hervorruft. Entscheidend ist nur, daß am Ort der induzierten Spannung kein Kurzschluß über die Rohrleitungswand entstehen kann.

In weiterer Ausgestaltung der Erfindung wird im Anspruch 2 vorgeschlagen, die Zuleitungen zu den Elektroden im Bereich des Keramikrohres durch eine Keramikummantelung zu isolieren. Am Ende des Keramikrohres befindet sich eine übergangsstelle, ab der die Zuleitungen aus mineralisolierten Mantelmeßleitern bestehen, welche dicht in die Wandung des Rohrleitungsstückes eingeschweißt werden können. Die Verwendung von mineralisolierten Mantelmeßleitern ist besonders günstig, da dichte Durchführungen von Mantelmeßleitern durch Metallwandungen relativ einfach zu bewerkstelligen sind. Im Inneren des Keramikrohres kann diese Art der Isolierung allerdings nicht verwendet werden, da dort der metallische Mantel wiederum die Kurzschlußströme verursachen würde, welche man durch die vorliegende Konstruktion vermeiden will. Im Inneren des Keramikrohres werden daher Keramikröhrchen oder eine keramische Masse zur Isolierung der Zuleitungen der Elektroden verwendet.

In weiterer Ausgestaltung der Erfindung wind vorgeschlagen, die Magnetspulen aus hochtemperaturbeständigen Spulen herzustellen. Dies ermöglicht eine kompakte Bauweise des Durchflußmessers, ohne daß die Spulen besonders gekühlt oder von der Rohrleitung entfernt angeordnet werden müßten. Hochtemperaturbeständige Spulen finden bisher z.B. bei elektromagnetischen Induktionspumpen Anwendung.

Ein Ausführungsbeispiel der Erfindung ist in der Zeichnung dargestellt und zwar zeigt

Fig. 1 einen Längsschnitt durch einen erfindungsgemäßen Durchflußmesser

Fig. 2 einen Querschnitt entlang der Linie II-II in Fig. 1 und

Fig. 3 einen Schnitt entlang der Linie III-III in Fig. 1

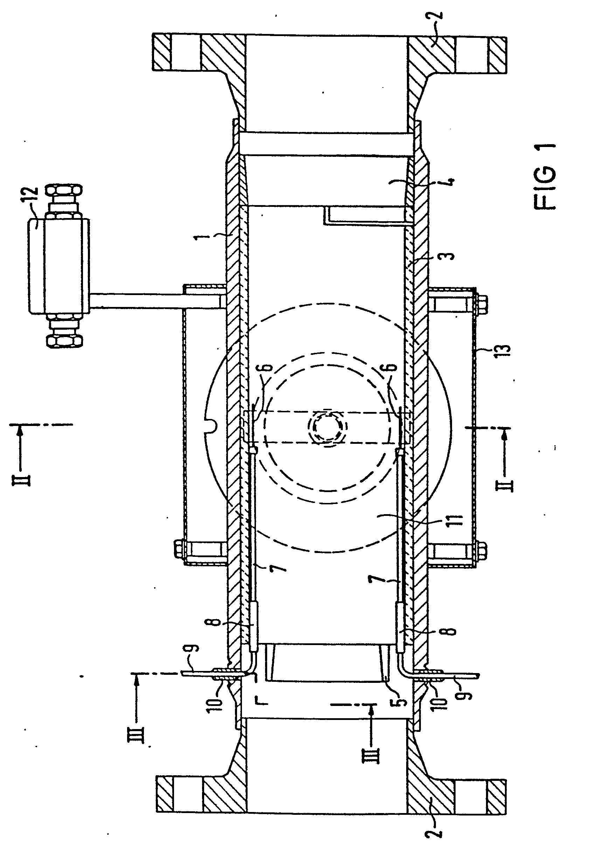

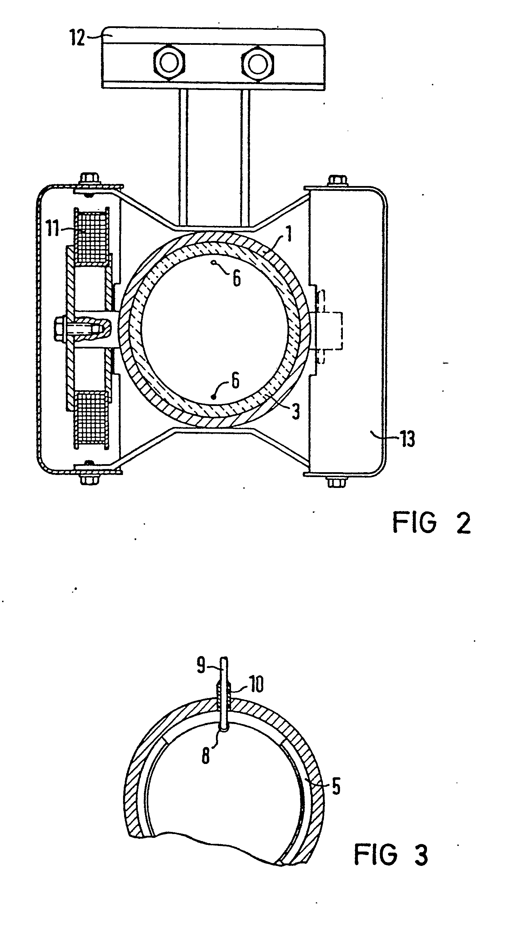

Fig. 1 zeigt ein Rohrleitungsstück 1, welches an beiden Enden mit Flanschen 2 versehen ist. Im Inneren des Rohrleitungsstückes 1 ist ein Keramikrohr 3 eingesetzt, welches quasi lose liegt. Dieses Keramikrohr 3 ist an seinen Enden durch eingeschweißte, etwas konische Haltestücke 4 und 5 verkeilt und durch einen zahnförmigen Eingriff des Haltestückes 4 verdrehsicher befestigt. Die Haltestücke 5 sind keine rotationssymmetrischen Teile sondern stützen das Keramikrohr 3 so ab daß zwischen ihnen Raum für das Verlegen von Leitungen bleibt. Im Inneren des Keramikrohres 3 sind Elektroden 8 angeordnet, deren Zuleitungen an der Innenseite des Keramikrohres 3 entlang verlegt sind. Dabei ist das erste Stück 7 dieser Zuleitungen mit Hilfe eines Keramikröhrchens isoliert, und nach einer Übergangsstelle 8 am Ende des Keramikrohres 3 werden die Zuleitungem in mineralisolierten Mantelmeßleitern 9 weitergeführt. Diese Mantelmeßleiter sind an den Durchführungen durch die Wandung des Rohrleitungsstückes 1 dicht eingeschweißt 10. In Fig. 1 gestrichelt angedeutet ist die Lage der Spulen 11, welche sich aus Fig. 2 deutlicher ergibt. Diese Spulen sind in einem am Rohrleitungsstück 1 befestigten Gehäuse 13 untergebracht. Ein Klemmenkasten 12 zur Unterbringung der elektrischen Anschlußklemmen ist ebenfalls auf dem Rohrleitungsstück befestigt.

Fig. 2 zeigt einen Querschnitt entlang der Linie II-II in Fig. 1 durch einen erfindungsgemäßen Durchflußmesser. Die hochtemperaturbeständigen Spulen 11 und die Magnetkerne liegen in einem Gehäuse 13 geschützt auf beiden Seiten des Rohrleitungsstückes 1. Als Magnetbleche werden Materialien mit hohem Curie-Punkt eingesetzt.

Fig. 3 zeigt einen Schnitt durch Fig. 1 entlang der Linie III-III. Die Haltestücke 5, die konische Form haben, sind mit dem Rohrleitungsstück 1 verschweißt und fixieren das Keramikrohr 3 in seiner Lage. Zwischen den Haltestücken 5 bleibt Platz zur Verlegung der Mantelmeßleiter 9, die Bereich der Haltestücke 5 durch die Rohrwand geführt und mit dieser verschweißt 10 sind.

**Patentansprüche**

1. Magnetisch-induktiver Durchflußmesser, bestehend aus einem innenisolierten Rohrleitungsstück (1), in welchem durch außen angebrachte Magnetspulen (11) ein Magnetfeld senkrecht zur Strömungsrichtung erzeugbar ist, wobei die Innenisolierung des Rohrleitungsstückes (1) aus einem Keramikrohr (3) besteht, welches mit einem geringen Spiel eingesetzt ist, und wobei mindestens zwei Elektroden (6) im Inneren des Rohrleitungsstücks (1) angeordnet sind, gekennzeichnet durch folgende Merkmale:

a) Das als Innenisolierung dienende Keramikrohr (3) ist an den Enden mit Haltestücken (4, 5) verkeilt.

b) Die Zuleitungen (7) zu den Elektroden (6) sind an der Innenseite des Keramikrohres (3) verlegt und erst außerhalb desselben durch die Wand des Rohrleitungsstückes (1) geführt.

2. Durchflußmesser nach Anspruch 1, gekennzeichnet durch folgende Merkmale:

a) Die Zuleitungen (7) der Elektroden (6) sind im Bereich des Keramikrohres (3) isoliert durch eine Keramikummantelung.

b) Am Ende des Keramikrohres (3) befindet sich eine Übergangsstelle (8), ab welcher die Zuleitungen aus mineralisolierten Mantelmeßleitern (9) bestehen, welche dicht in die Wandung des Rohrleitungsstückes (1) eingeschweißt (10) sind.

3. Durchflußmesser nach Anspruch 1 oder 2, gekennzeichnet durch folgendes Merkmal:

a) Die Magnetspulen (11) bestehen aus hochtemperaturbeständigen Spulen.

**Claims**

1. A magnetic induction flow meter consisting of an internally insulated pipeline section (1), in which a magnetic field can be produced at right angles to the flow direction by externally attached magnetic coils (11), where the internal insulation of the pipeline section (1) consists of a ceramic pipe (3) inserted with negligible play, and where at least two electrodes (6) are arranged inside the pipeline section (1), characterized by the following features:

a) the ceramic pipe (3) which serves as internal insulation iswedged to retaining sections (4, 5) at the ends so as to be secured against torsion; and

b) the supply lines (7) to the electrodes (6) are installed on the inner side of the ceramic pipe (3) and only pass outwardly through the wall of the pipeline section (1) beyond the end of said ceramic pipe (3).

2. A flow meter as claimed in Claim 1, characterised by the following features:

a) the supply lines (7) of the electrodes (6) are insulated by aceramic encapsulation in the region of the ceramic pipe (3); and

b) at the end of the ceramic pipe (3) a transition point (8) is arranged, from which the supply lines consist of mineral-insulated sleeved measuring conductors (9) which are closely welded (10) into the wall of the pipeline section (1).

3. A flow meter as claimed in Claim 1 or 2, characterised by the following feature:

a) the magnetic coils (11) consist of coils resistantto high temperatures.

**Revendications**

1. Débitmètre à induction magnétique, comprenant un tronçon de conduite (1) isolé interieurement, dans lequel un champ magnétique perpendiculaire à la direction d'écoulement peut être engendré par des bobines magnétiques (11) disposées à l'extérieur, l'isolation interne du tronçon de conduite (1) étant formée par un tube céramique (3) qui est inséré avec un faible jeu dans ce tronçon de conduite, avec disposition d'au moins deux électrodes (6) à l'intérieur du tronçon de conduite (1),

caractérisé en ce que:

a) le tube céramique (3) servant d'isolation interne est coincé aux extrémités par des pièces de fixation (4, 5) de manière qu'il ne puisse pas tourner;

b) les connexions (7) des électrodes (6) sont disposées sur le côté intérieur du tube céramique (3) et sont seulement passées à travers la paroi du tronçon de conduite (1) à l'extérieur de ce tube.

2. Débitmètre selon la revendication 1, caractérisé en ce que:

a) les connexions (7) des électrodes (6) sont isolées par un gainage céramique dans la région du tube céramique (3);

b) un point de raccordement (8) est prévu à la fin du tube céramique (3) et les connexions sont formées, à partir de ce point de raccordement, par des conducteurs de mesure sous gaine à isolation minérale (9), qui sont soudés étanches (10) dans la paroi du tronçon de conduite (1).

3. Débitmètre selon la revendication 1 ou 2, caractérisé en ce que:

a) les bobines magnétiques (11) sont des bobines capables de résister à des températures élevées.

FIG 1

FIG 2

FIG 3